# EUROPEAN PATENT SPECIFICATION

(11) **EP 0 415 962 B1**
(45) Date of publication and mention of the grant of the patent: **04.08.1993**
(21) Application number: 89905437.3
(22) Date of filing: 27.04.1989
(51) Int. Cl.: B64F 1/02, E02F 9/24

(54) **A VEHICLE ARRESTING DEVICE**
VORRICHTUNG ZUM ANHALTEN EINES FAHRZEUGES
DISPOSITIF D'ARRET DE VEHICULES

(30) Priority: 27.04.1988 GB 8809927
(43) Date of publication of application: 13.03.1991
(73) Proprietor: SPANSET INTER AG, CH-8618 Oetwil am See (CH)
(72) Inventor: CARR, David William Bentley, Avening, nr Tetbury, Glos. GL8 8NY (GB)
(74) Representative: Mock, Hans
(86) International application number: GB8900449
(87) International publication number: WO8910302

(56) References cited:
- GB-A- 1 114 340
- US-A- 2 450 328
- US-A- 2 854 201
- US-A- 2 913 197

## Description

This invention relates to a device for arresting vehicles, in particular road vehicles.

It is often necessary for security purposes to enable a selected road vehicle to be brought quickly to rest with minimal damage to the vehicle or injury to its occupants.

It is known to provide aircraft barriers, for example on aircraft carriers or to prevent overrun of runways of airports, which take the form of a flexible net placed in the path of a landing aircraft so as to be entrained thereby, restraining means being provided for restraining the barrier net with reference to a fixed anchorage and causing controlled deceleration to rest of the net and the aircraft. Such aircraft barriers are described in U.S. Patents Nos. 2450328 and 2854201 and in each case the aircraft barrier net is held at each end by upper breakable suspension means and by lower connections to the restraining means.

The arrest of a road vehicle for security purposes presents different problems because the driver of the road vehicle is concerned to evade capture. Reliable engagement of the barrier net with the bonnet of the vehicle and underneath the front of the vehicle for possible entanglement with the wheels thereof is therefore desirable. It is an object of the present invention to provide a vehicle arresting device particularly suited to the arrest in this manner of road vehicles of different size.

According to the present invention there is provided a vehicle arresting device comprising a vehicle barrier in the form of a flexible net adapted to be placed in the path of an oncoming vehicle so as to be accelerated thereby from rest, and restraining means for restraining the net with reference to a fixed anchorage and causing controlled deceleration to rest of the net and the vehicle, the net being held at each end by upper breakable suspension means and by lower connections to the restraining means, characterised in that said connections are movable upwardly of the net, following rupture of the suspension means by an impacting vehicle, so as to ensure correct orientation of the net relative to the vehicle.

Preferably, the restraining means comprises a textile web having two free ends for interconnecting the anchorage and the barrier and an intermediate portion which is doubled and joined so as to be torn apart when said ends are separated.

The barrier is preferably a net of textile material.

The invention will now be further described by way of example only, with reference to the accompanying drawings, in which:
Fig. 1 is a diagrammatic elevation of one embodiment of vehicle arresting device in accordance with the invention;
Fig. 2 is a similar view of a second embodiment;
Fig. 3 is a diagram illustrating the operation of a remotely controllable automatic lifting and supporting means for the arresting device;
Fig. 4 is a view similar to Fig. 2 of a third embodiment, and
Fig. 5 is a diagram in plan illustrating the mode of operation of the Fig. 4 embodiment.

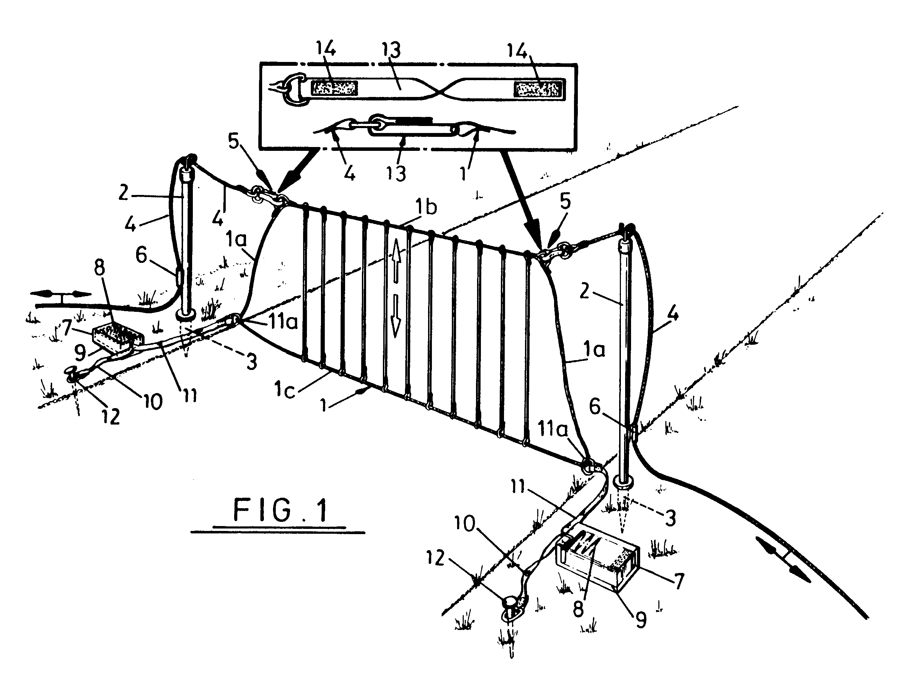

Referring now to Fig. 1, the arresting device, which is intended for arresting a motorcar or other road vehicle of similar size, comprises a vehicle barrier in the form of a net 1 shown in the raised position strung between posts 2 fixed in ground sockets 3. The net 1 is held in the raised position by deployment cords 4 connected by re-usable breakaways 5 to jamming cleats 6 on each post. The lower end of the net 1 is attached at each side to a restraining device 7 which comprises a length of webbing 8 folded into a bag 9 save for two protruding ends 10, 11 which are connected respectively to a ground anchor 12 and the net 1. The webbing 8 is woven in such a way that when the webbing ends are violently separated a woven double portion progressively tears apart. Such a "tear web" is well known in other applications and will therefore not be further described.

Normally the vehicle arresting barrier will be in an out of use condition with the net 1 in a lowered position lying horizontally on the road across which the barrier is arranged. Vehicles can thus pass over the net 1 without hindrance. On the approach of a vehicle to be arrested the net 1 is quickly raised into the upright position by pulling at least one of the deployment cords 4 and jamming it in its cleat 6 so that the cord when released supports the net. The breakaways 5 connected to the cords 4 are arranged to release as soon as substantial tension is exerted on the cords by the vehicle. Such a breakaway may be provided (as shown in detail in the inset of Fig. 1) by a length of webbing 13 connected at a looped end to a D-ring fitting at the end of the cord 4 and looped through the net 1 and back through the fitting for securement to itself by adhesive textile strips (e.g. Velcro®) 14. As the oncoming vehicle drives between the posts 2 its front engages the net 1 and entrains it so as to tension the cords 4 and release the breakaways 5. At the same time the ends 10, 11 of the tear web restraining device 7 separate causing the double portion to tear apart and exert a controlled breaking force on the net 1 and the vehicle. By the time that the vehicle has been arrested part or all of the doubled portion of the teak web device 7 may have been consumed. In the latter case the device 7 will require replacement but in the former the device may be reused until insufficient tear portion is available for the next occasion.

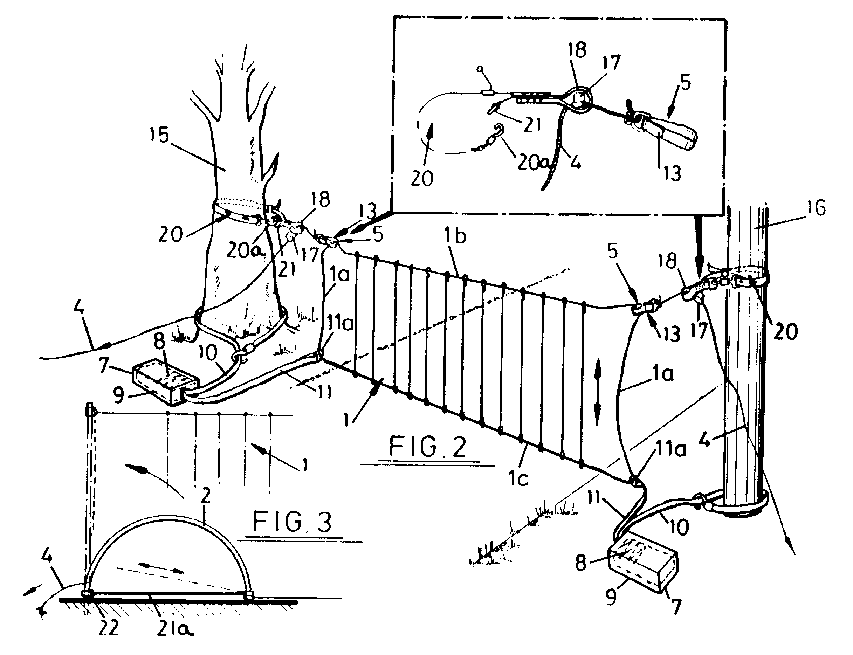

In the embodiment of Fig. 2 (in which the same reference numerals have been used where appropriate) the tear web devices 7 are secured to available anchorages such as a tree 15 or a lamp post or telegraph pole 16. Breakaways 5 serve the same purpose as in Fig. 1 but in the absence of the cleats 6 on special-purpose posts 2 each cord 4 passes through a jamming cleat 17 encased in a webbing tube 18 secured to a webbing strap of adjustable length passing around the tree or pole 15, 16 and having hook and ring end fittings 20a and 21 which interengage to form loops 20.

In other respects the operation of the Fig. 2 embodiment is similar to that of Fig. 1.

Fig. 3 shows a variant in which flexible posts 2 are bent into the flexed position shown in full line and held there by a cord 21a fixed to the upper end of the post 2 and to a ring 22 slidable on the lower section of the post 2. The deployment cord 4 is connected to the ring 22, the arrangement being such that when the cord 4 is jerked with the post 2 sprung into the bent position the ring 22 moves from an unstable illustrated position upwardly along the post thereby allowing the post to spring into the upright position and automatically raise the net.

The illustrated vehicle arresting device has the advantage that the vehicle is brought to rest in a controlled manner without causing damage to the vehicle or injury to its occupants. Furthermore, depending upon the design of the net, the speed of the vehicle and other factors, the vehicle may come to rest with its front and sides enmeshed in the net so as to inhibit escape through the side doors, and the front wheels may engage in mesh openings so that the vehicle and the net are interlocked and it is impossible to escape from the net by reversing the vehicle. An important feature of the arresting device enabling proper engagement of vehicles of varying size is the sliding attachment (by means of a D-ring fitting 11a) of the webbing end 11 with the respective end loop 1a of the net 1 so enabling the attachment point to move to an intermediate position between the upper and lower horizontal runs 1b, c of the net 1 as determined by the forces acting on the net. Because of this feature the upper horizontal run 1b of the net 1 reliably engages the bonnet of the vehicle while the lower run 1c engages underneath the front of the vehicle for possible entanglement with the wheels thereof.

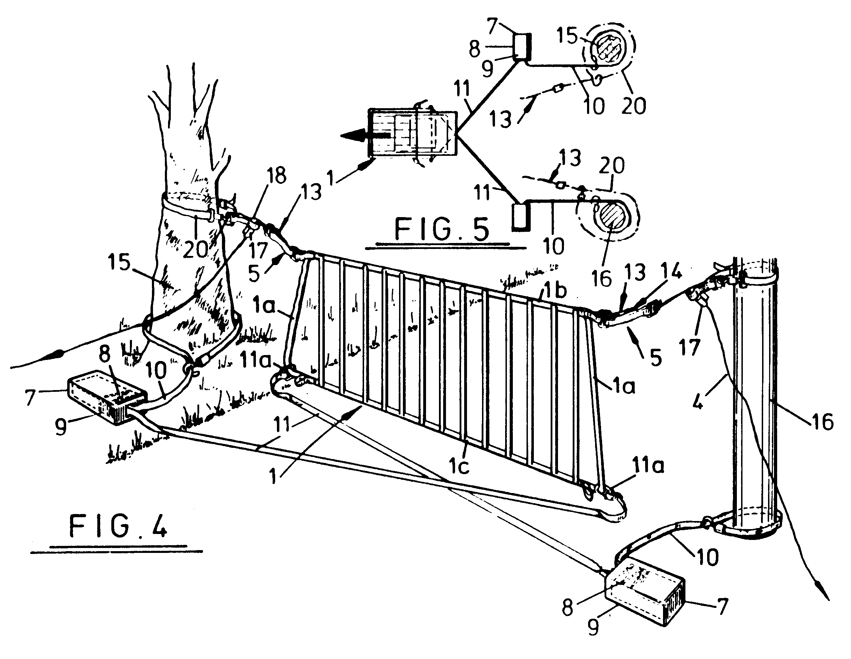

Fig. 4 is a variant of the Fig. 2 embodiment in which similar parts have been given the same reference numerals and are not further described. The essential difference between the Figs. 2 and 4 embodiments is that the latter has the lower end of the net 1 attached at each side (by the sliding D-ring fitting 11a engaging the end loop 1a) to the webbing end 11 of the restraining device 7 at the opposite side of the net 1 such that these ends 11 cross in the path of the oncoming vehicle the front and sides of which become enveloped in the net 1 as illustrated in Fig. 5.

It will be appreciated that alternative restraining means may be employed in place of the tear web described and illustrated. For example, a mechanical braking device may be attached by a line to the net 1. However, the tear web is preferred because it is light, compact and maintenance-free.

## Claims

1. A vehicle arresting device comprising a vehicle barrier in the form of a flexible net (1) adapted to be placed in the path of an oncoming vehicle so as to be accelerated thereby from rest, and restraining means (7) for restraining the net (1) with reference to a fixed anchorage (12) and causing controlled deceleration to rest of the net (1) and the vehicle, the net (1) being held at each end by upper breakable suspension means (4, 5) and by lower connections (11a) to the restraining means (7), characterised in that said lower connections (11a) are movable upwardly of the net (1), following rupture of the suspension means (4, 5) by an impacting vehicle, so as to ensure correct orientation of the net (1) relative to the vehicle.

2. A device as claimed in claim 1, characterised in that the restraining means (7) comprises a textile web (8) having two free ends (10, 11) for interconnecting the anchorage (12)and the net (1) and an intermediate portion which is doubled and joined so as to be torn apart when said ends are separated.

3. A device as claimed in claim 1 or 2, characterised in that the net (1) has respective restraining means (7) at opposite ends thereof.

4. A device as claimed in claim 3, characterised in that each restraining means (7) at one end of the net (1) is connected by its lower connection (11a) to the opposite end of the net (1) such that the restraining means cross in front of the net (1).

5. A device as claimed in any one of the preceding claims, characterised in that the anchorage (12) is provided by a natural or man-made fixture (2, 15, 16) and the restraining (7) and suspension (4, 5) means have loops (20) of variable size for engaging said fixture (2, 15, 16).

6. A device as claimed in claim 4 or 5, characterised in that the suspension means (4, 5) includes a breakable section comprising a material loop (13).

## Patentansprüche

1. Fahrzeug-Anhaltevorrichtung, die folgendes umfaßt: eine Fahrzeugschranke in Gestalt eines flexiblen Netzes (1), das darauf eingerichtet ist, in den Weg eines herankommenden Fahrzeugs gestellt zu werden, um davon aus der Ruhelage beschleunigt zu werden, und eine Zurückhalteeinrichtung (7) zum Zurückhalten des Netzes (1) mit Bezug auf eine ortsfeste Verankerung (12) und dazu, eine kontrollierte Abbremsung des Netzes (1) und des Fahrzeugs zur Ruhelage zu veranlassen, wobei das Netz (1) an jedem Ende mittels einer oberen reißfähigen Aufhängungseinrichtung (4, 5) und mittels unterer Verbindungen (11a) an der Zurückhalteeinrichtung (7) gehalten wird, dadurch gekennzeichnet, daß auf ein Reißen der Aufhängungseinrichtung (4, 5) durch ein aufprallendes Fahrzeug hin die unteren Verbindungen (11a) relativ zum Netz (1) nach oben beweglich sind, um eine korrekte Ausrichtung des Netzes (1) relativ zum Fahrzeug zu gewährleisten.

2. Vorrichtung gemäß Anspruch 1, dadurch gekennzeichnet, daß die Zurückhalteeinrichtung (7) folgendes umfaßt: eine Textilbahn (8), welche zwei freie Enden (10, 11) zum miteinander Verbinden der Verankerung (12) und des Netzes (1) aufweist, und ein dazwischenliegendes Teilstück, welches zweifach ausgeführt und zusammengefügt ist, so daß es auseinandergerissen wird, wenn die Enden getrennt werden.

3. Vorrichtung gemäß Anspruch 1 oder 2, dadurch gekennzeichnet, daß das Netz (1) an seinen gegenüberliegenden Enden eine jeweilige Zurückhalteeinrichtung (7) aufweist.

4. Vorrichtung gemaß Anspruch 3, dadurch gekennzeichnet, daß jeweils die an dem einen Ende des Netzes (1) befindliche Zurückhalteeinrichtung (7) mittels ihrer unteren Verbindung (11a) mit dem gegenüberliegenden Ende des Netzes (1) derart verbunden ist, daß sich die Zurückhalteeinrichtungen vor dem Netz (1) überkreuzen.

5. Vorrichtung gemäß einem der vorhergehenden Ansprüche, dadurch gekennzeichnet, daß die Verankerung (12) als eine natürliche oder künstliche feststehende Einrichtung (2, 15, 16) vorgesehen ist und die Zurückhalteeinrichtung (7) und die Aufhängungseinrichtung (4, 5) zum In-Eingriff-Nehmen der feststehenden Einrichtung (2, 15, 16) Schlingen (20) variierbarer Größe aufweisen.

6. Vorrichtung gemäß Anspruch 4 oder 5, dadurch gekennzeichnet, daß die Aufhängungseinrichtung (4, 5) einen reißfähigen Abschnitt einschließt, der eine Gewebeschlinge (13) umfaßt.

## Revendications

1. Dispositif d'arrêt de véhicule, comprenant une barrière pour véhicule sous forme d'un filet souple (1) adapté pour être placé dans le trajet d'un véhicule avançant de manière à être accéléré ainsi depuis le repos, et un moyen de restriction (7) pour restreindre le filet (1) par rapport à un ancrage fixe (12) et pour provoguer la décélération contrôlée jusqu'au repos du filet (1) et du véhicule, le filet (1) étant maintenu à chaque extrémité par un moyen de suspension cassable supérieur (4, 5) et par des raccords inférieurs (11a) au moyen de restriction (7), caractérisé en ce que lesdits raccords inférieurs (11a) sont capables de déplacement vers le haut du filet (1), à la suite de la rupture du moyen de suspension (4, 5) par l'impact d'un véhicule, de manière à assurer l'orientation correcte du filet (1) par rapport au véhicule.

2. Dispositif selon la revendication 1, caractérisé en ce que le moyen de restriction (7) comprend une bande de textile (8) présentant deux extrémités libres (10, 11) destinées à raccorder l'ancrage (12) et le filet (1) l'un à l'autre, et une portion intermédiaire qui est doublée et jointe de manière à être déchirée lorsque lesdites extrémités sont séparées.

3. Dispositif selon la revendication 1 ou 2, caractérisé en ce que le filet (1) présente un moyen de restriction respectif (7) a des extrémités opposés de celui-ci.

4. Dispositif selon la revendication 3, caractérisé en ce que chaque moyen de restriction (7) à chaque extrémité du filet (1) est raccordé par son raccord inférieur (11a) à l'extrémité opposée du filet (1) de telle sorte que les moyens de restriction se croisent devant le filet (1).

5. Dispositif selon l'une quelconque des revendications précédentes, caractérisé en ce que l'ancrage (12) est prévu par une installation naturelle ou artificielle (2, 15, 16) et les moyens de restriction (7) et de suspension (4, 5) présentent des boucles (20) de taille variable destinées à engager ladite installation (2, 15, 16).

6. Dispositif selon la revendication 4 ou 5, caractérisé en ce que le moyen de suspension (4, 5) comporte une section cassable comprenant une boucle en tissu (13).
